# EUROPEAN PATENT SPECIFICATION

(11) **EP 0 307 987 B1**
(45) Date of publication and mention of the grant of the patent: **25.10.1995**
(21) Application number: 88201856.7
(22) Date of filing: 31.08.1988
(51) Int. Cl.: C08K 5/21, C08K 5/16, C08J 9/00, C08G 18/38, C08G 18/54, C08K 9/00

(54) **Flexible polyurethane foam having a high fire resistance**
Flexibler Polyurethanschaum mit hoher Feuerbeständigkeit
Mousse souple de polyuréthane à haute résistance au feu

(30) Priority: 18.09.1987 BE 8701053
(43) Date of publication of application: 22.03.1989
(73) Proprietor: RECTICEL, 1200 Brussels (BE)
(72) Inventor: Jourquin, Lucien, B-9200 Wetteren (BE); Du Prez, Eddie, B-9650 Sint-Maria-Oudenhove (BE)
(74) Representative: Callewaert, Jean

(56) References cited:
- EP-A- 0 084 700
- GB-A- 1 030 162
- US-A- 4 246 361
- US-A- 4 433 071

## Description

The invention relates to a high resilient polyurethane foam as defined in the preamble of claim 1.

In the context of the present invention "high resilient polyurethane foam" means a flexible polyurethane foam which is also known to the skilled man as "HR foam", "Cold cure Foam", or foams which are technically equivalent therewith, except for the conventional usually less elastic polyurethane foams.

Usually, in high resilient foam formulations, a high molecular weight reactive ether polyol indicates a polyol with a molecular weight which is generally comprised between 4000 and 10,000 and preferably between 4500 and 6500, which is formed through polyaddition of propylene oxide and ethylene oxide on polyfunctional initiator molecules and of which the content of primary OH end groups with respect to the total amount of primary and secondary OH end groups is larger than 60%, and is preferably comprised between 70 and 95%. This polyol may comprise organic fillers or not. Further a high resilient foam formulation can comprise a surfactant, the foam stabilization capacity of which is less than the one of the silicone surfactants (polydimethylsiloxane-polyethers copolymers) which are used for the so-called conventional polyether foams.

In some cases the use of such surfactants is not necessary.

As isocyanates, TDI or MDI (and MDI derivatives) or mixtures TDI/MDI are currently used in HR formulations. For the manufacture of conventional polyether foams use is generally made of polyols having a high content of secondary OH groups, a molecular weight of between 2800 and 4000 and a hydroxyl number of between 40 and 60.

Further for those polyurethane foams, use is nearly always made of toluenediisocyanate (TDI) as isocyanate.

Finally the preparation of the conventional polyether foams usually does not involve the addition of cross-linkers and/or extenders.

The invention essentially relates to a flexible high resilient polyurethane foam with a strongly increased fire resistance which, in addition to the traditional applications, is suitable for high fire resistant applications such as, for example, cushions of seats for public transport, theatres, movies or mattresses in jails, hospitals.

For preparing such polyurethane foams having a high fire resistance, use is actually often made of free urea as fire retardant. Due to the high solubility of this fire retardant in the polyol and consequently the fast and strong increase of viscosity, it is necessary to dose this fire retardant separately when manufacturing the polyurethane foam, for example by means of an Archimedean screw. Indeed, due to the strong viscosity increase, which may result from the addition of the solid fire retardant to the polyol as liquid dispersion medium, certain problems can arise, i.e. as to dosing (pumping) the polyol/urea mixture and the continuously variable increasing viscosity of that mixture, which renders an homogeneous dosing impossible and thus also the control of the foaming process and the foam quality. Such a mixture even becomes quasi solid (physical gel) after less than one day storage in the vessels and the conducts of the installation for manufacturing the foam.

Furthermore, due to this required separate dosing of the solid fire retardant, it is impossible to make use of the conventional polyurethane foam preparation technology consisting of a continuous dosing of liquid components or liquid dispersions in a mixing chamber of said installation.

According to US-A-4246361, it is already known to use particular urea derivatives as fire retardant in flexible polyurethane foams.

The main object of the invention is however to provide further formulations for preparing flexible polyurethane foam with a high fire resistance and which can be used easily in the conventional apparatuses for preparing polyurethane foams.

In order to achieve this object, the polyurethane foam according to the invention is characterized in that said fire retardant comprises at least a linear urea-formol oligomer mixture having the general formula NH₂-CO-NH-[CH₂-NH-CO-NH]ₙ-CH₂-NH-CO-NH₂, wherein n has the value from 0 to 50.

In a particular embodiment of the invention the content of said fire retardant comprises 20 to 100 parts by weight per 100 parts by weight basic polyol.

In a further particular embodiment of the invention, the polyurethane foam comprises, besides said fire retardant, also between 0 and 50 parts by weight with respect to 100 parts by weight polyol of at least one of the following fire retardants:
- a halogenated organic phosphate or phosphonate, such as tris-(2-chloroethyl)-phosphate, tris-(dichloropropyl)phosphate, tris-(dibromopropyl) phosphate, tetrakis-(2-chloroethyl)-ethylene-diphosphate;
- an organic halogen free phosphate or phosphonate, such as tricresylphosphate, dimethyl-methylphosphonate;
- a phosphorus free aliphatic halogen compound, such as chloroparaffin, PVC powder;
- an alicyclic or aromatic halogenated compound, such as polybrominated diphenyloxide;
- antimony oxide and/or zinc borate in a synergic combination with a halogen containing fire retardant;
- an inorganic fire retardant, such as ammonium salt, (more particularly ammonium phosphate, ammonium borate and ammonium sulphate) and aluminium trihydrate;
- an organic nitrogen compound, different from urea or said ureaformol oligomer, such as melamine, isobutylene diurea.

The invention also relates to a method for manufacturing that polyurethane foam.

The method is characterized by the fact that said fire retardant, which is substantially insoluble in the polyol, is dispersed in powdered form in that polyol and that said mixture is thereafter brought into contact with other reaction components for forming the polyurethane foam.

Other particularities and advantages of the invention will become clear from the description given hereinafter amongst others of a number of typical examples of suitable fire retardants and of the other reaction components of the flexible polyurethane foam according to the invention.

The flexible polyurethane foam, to which the invention relates, is situated in a density range between 20 and 150 kg/m³, more particularly between 25 and 100 kg/m³, and belongs to the type having a high elasticity (high resilient foam) on polyether basis.

The concerned polyurethane foam can be manufactured either as block foam by free continuous foaming according to the so-called "one shot slabstock process", or discontinuous in a closed mould ("moulding process").

The most typical density limits for the continuous "one shot slabstock process" are situated preferably between 25 and 80 kg/m³, while for the discontinuous method in a closed mould it is comprised preferably between 40 and 100 kg/m³.

Those foams are characterized by the fact that they comprise a fire retardant which provides to the latter an increased fire resistance, and this also in the presence of so-called high ignition sources, such as 150 gr of paper. In this respect, they can therefore also be used for cushions or mattresses in so-called "high risk applications" such as public transport, public offices as already mentioned hereinabove.

According to the invention use is made of a primary fire retardant which is less soluble in water or polyols. This fire retardant comprises linear low molecular urea-formol oligomers with the general formula: NH₂-CO-NH-[CH₂-NH-CO-NH]ₙ-CH₂-CO-NH₂, wherein n has the value from 0 to 50 and preferably from 1 to 20. Further it may also comprise physically modified urea which consists of powdered urea, the particles of which are coated with a less soluble film, such as molten sulphur or certain resins, which coating may represent 5 to 30% by weight with respect to the urea or dicyandiamide with the formula:

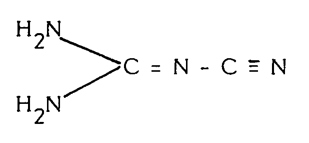

Thanks to the strongly limited solubility of these three fire retardants in the reaction components for preparing the polyurethane foam, they can be dispersed in the form of grains or powder in the liquid basic polyol, thus allowing an easy dosing and thus enabling the use of the known dosing facilities for manufacturing the flexible polyurethane foam.

The fire extinguishing properties of these fire retardants is based on the thermal decomposition of those nitrogen compounds to form incombustible gases, such as water, C0₂, ammonium, which dilute the combustible gases in situ and contribute moreover little to additional smoke generation and smoke toxicity.

The conventional high molecular and/or cross-linked urea-formol resins are therefore less suitable as fire retardant in flexible polyurethane foams, due to their dissociation temperatures which are too high compared to the dissociation temperature of the polyurethane foam itself.

The solid fire retardants of the invention can be metered according to the invention as fine granules, for example with a diameter of 1 to 3 mm, dispersed in the polyol, but they are preferably further ground to powders of for example 10 to 300 am, in order to make metering via metering pumps easier. Moreover, a physically more stable and homogeneous dispersion can be obtained in this way and the fire extinguishing characteristics of the polyurethane foam are improved due to the larger contact surface of the powdered fire retardant in the polyurethane foam. The content of those fire retardants, which are of the type of in water or polyol little soluble organic nitrogen compounds, more particularly urea derivatives, comprises preferably between 20 and 100 parts by weight per 100 parts by weight basic polyol.

In addition to the so-called primary fire retardants, the polyurethane foam according to he invention can possibly but not necessarily comprise other known fire retardants which thus enable to improve the fire extinguishing properties.

The concentration of those additional fire retardants, so-called secondary fire retardants, varies generally between 0 and 50 parts by weight and most typically between 3 and 25 parts by weight with respect to 100 parts by weight polyol.

Examples of such secondary fire retardants are:
- halogenated organic phosphates or phosphonates, such as: tris-(dichloropropyl)phosphate, tris-(2-chloroethyl)phosphate, tris-(monochloropropyl)phosphate, tris-(dibromopropyl)phosphate, tetrakis-(2-chloroethyl)-ethylene-diphosphate;
- phosphorus free aliphatic halogen compounds, such as chloroparaffin, PVC powder;
- alicyclic or aromatic halogenated compounds, such as polybrominated diphenyloxide;
- antimony oxide and/or zinc borate in synergic combination with a halogen containing fire retardant;
- inorganic fire retardants, such as ammonium salt, (more particularly ammonium phosphate, ammonium borate and ammonium sulphate), aluminium trihydrate;
- organic nitrogen compounds, different from urea or said ureaformol oligomers, such as melamine, isobutylene diurea.

Melamine in an amount of 10 to 50 parts by weight per 100 parts by weight polyol is preferably chosen as secondary fire retardant.

In a more specific embodiment of the invention, use is made of a linear urea-formol oligomer with said general formula wherein n varies from 1 to 20 in combination with melamine in a mutual weight ratio: linear formol oligomer/melamine of 2/1 to 1/2 and/or in combination with said halogenated organic phosphate in a mutual weight ratio: linear formol oligomer/halogenated phosphate from 1/0.02 to 1/1.

The halogenated organic phosphates or phosphonates can possibly comprise also, in addition to phosphorus and halogen, reactive OH groups which are incorporated in the polymer chain after reaction with the isocyanate. Such fire retardants are inter alia sold by Hoechst under the trade names "Exolit 107" and "Exolit 413".

Further the flexible polyurethane foam according to the invention which comprises at least the above described urea-formol oligomer fire retardant, is prepared on the basis of the following raw materials:

### 1) Polyols

The polyols primarily consist of high molecular weight reactive polyoxyalkylene compounds which are prepared by polyaddition of propyleneoxide (PO) and ethyleneoxide (EO) on polyfunctional initiator molecules with OH and/or NH, and/or NH₂ groups, the most typical of which are glycerol and trimethylolpropane.

Further, the content of primary OH groups with respect to the sum of the primary and the secondary OH groups comprises at least 60%, the molecular weight is preferably comprised between 4500 and 6500 for a functionality of 3, the number of functional end groups per polyol molecule varies from 2 to 4, but is preferably equal to 3, and has a hydroxyl number which varies from 20 to 40 and preferably from 24 to 38.

These high molecular weight reactive polyols may either or not comprise organic polymer fillers which are present in the form of dispersions.

The organic fillers -if present- can be of the following type:
- vinyl(co)polymers (polystyrene, polyacrylonitrile), the vinylmonomers being polymerised in situ (through a radical process) in the basic polyol and are thus also partially grafted thereon. Such polyols are called "grafted polymer polyols";
- polyurea addition products, produced by in situ reaction between an isocyanate (for example tolenediisocyanate) and a polyamine (for example hydrazine) in the basic polyol as liquid reaction medium. Such polyols are sold by Bayer/Mobay under the name "PHD polyols", also known under the name "Polyharnstoff Dispersion Polyole";
- polyurea or polyurethane addition products, produced by in situ reaction between an isocyanate, (for example, toluenediisocyanate) and an alkanolamine (for example, diethanolamine or triethanolamine) in the basic polyol as liquid reaction medium (such polyols are put on the market under the name "PIPA polyols").

The foam formulations for high resilient foams can be based on the above described polyols without fillers or alternatively on the basis of polyols with organic fillers, in which case the amount of fillers may comprise 4 to 20% by weight (and more typically 6 to 15% by weight). Of course such filled polyols may be a mixture of an unfilled polyol and of a more or less concentrated filled polyol.

### 2) Isocyanates

The most typical isocyanates are toluenediisocyanate (TDI), 4,4'-diphenylmethanediisocyanate (MDI) and chemically modified derivatives thereof (such as prepolymer, isocyanurate, biuret, carbodiimide).

Also mixtures of TDI and MDI, either pure or as derivatives are possible.

The NCO index of these isocyanates varies preferably between 80 and 120.

### 3) Catalysts

As catalysts in the present invention, use is preferably made of tertiary amines, such as triethylenediamine, dimethylaminoethanol and bis-(2-methyl)aminoethylether, which are typically used in flexible conventional polyether and high resilient foams.

Besides these tertiary amines, use can also be made of organometal catalysts, as it is also usual in flexible polyether and high resilient foams.

Typical examples thereof are stannous octoate and dibutyltin dilaurate.

### 4) Cross-linkers/extenders

Those are generally formed by low molecular hydrogen active compounds with a functionality of 2 to 8 having OH and/or NH and/or NH₂ groups, i.e. polyalcohols, polyamines and alkanolamines.

These compounds can perform several functions such as:
- controlling the balance between the polymerization (gellification) and the blowing (foaming) reaction during the foaming process
- increasing (=catalyse) the reaction speed during the foaming process (in the case of tertiary nitrogen being present in the cross-linkers/extenders).
- influencing the physical properties (compression resistance) of the obtained foam materials.

Typical examples of such compounds are diethanolamine, triethanolamine, ethyleneglycol, propyleneoxide and ethyleneoxide addition products on ethylenediamine, trimethylolpropane, glycerin, diisopropylamine, aromatic diamines.

### 5. Blowing agents

As chemical blowing agent, use is always made of water, and this preferably in an amount of 0.8 to 5 parts by weight per 100 parts by weight polyol, more specifically 2 to 4 parts by weight per 100 parts by weight polyol. Due to the reaction of water with the isocyanate C0₂ gas is produced.

In addition to water, use can possibly be made of a physical blowing agent, such as low boiling liquid halogenated hydrocarbons, for example trichlorofluoromethane and methylene chloride.

The amount of such a physical blowing agent varies generally between 0 and 30 parts by weight per 100 parts by weight basic polyol and more specifically between 0 and 20 parts by weight thereof.

### 6) Surfactants

Possibly, in order to obtain an additional stabilization and homogenisation of the cell structure of the polyurethane foam, surface-active agents having a relatively low molecular weight with respect to the compounds used for the conventional polyether are added. Further these agents have a smaller foam stabilizing capacity than those used in conventional polyether foams.

The most typical thereof are inter alia polydimethylsiloxane oils or polydimethylsiloxanepolyether copolymers, as usually used in high resilient formulations (HR). Such compounds are for example "L5307", "L5305" and "L5309" (Union Carbide); "B4113" and "B4380" (Goldschmidt); Q2-5043 (Dow Corning); "KS43" and "KS53" (Bayer).

In the tables given hereunder a series of examples of formulations of polyurethane foams with their characteristics are given, some of which are however not according to the invention as indicated hereinafter.

Abbreviations and codes which are used in these tables and relating both to the raw materials and to the properties are explained hereinafter.

### 1. RAW MATERIALS

### a) Polyols

- P1 = reactive polyethertriol type
   - addition product: glycerin + propyleneoxide (PO) + ethyleneoxide (EO)
   - functionality: 3
   - % prim OH: 75
   - % EO (with respect to EO + PO): 13
   - hydroxyl number (IOH): 36
   - MW: 4700
- P2 = idem to P1 but % prim. OH: 85
   % EO: 15
   IOH: 28
   MW: 6000
- P3 = idem to P1, but with dispersed polyurea filler (PHD) having a content of dispersed PHD in the total polyol: 7% by weight
- P4 = idem to P1, but with polyacrylonitrile-polystyrene copolymer dispersion in total polyol: 10% by weight
- P5 = idem to P1, but with "PIPA" dispersion in total polyol: 10% by weight (PIPA type = TDI + triethanolamine addition product).

### b) Isocyanates

- 11 = TDI 80/20 (mixture 80% 2-4 toluenediisocyanate + 20% 2-6 toluenediisocyanate)
- 12 = chemically modified TDI, type "Desmodur MT58" (trademark of Bayer) - % NCO = 40.5
- 13 = crude MDI (oligomer mixture on the basis of 4,4' diphenylmethane diisocyanate - % NCO = 31, for example Desmodur 44V20 (trademark of Bayer)
- 14 = prepolymer on the basis of pure MDI, type "Supracec VM28" (trademark of ICI) - NCO% = 25

### c) Blowing agents

- TW = total water in formulation (parts by weights per 100 parts polyol) (i.e. taking into account water which may be present in the used raw materials)
- F11 = trichlorofluoromethane
- MC = methylene chloride.

### d) Catalysts

- C033LV = DABCO 33LV = 33% solution of triethylenediamine in dipropyleneglycol solvent
- cat. A1 (UC) = 70% solution of bis-(2-methyl)-aminoethylether in dipropyleneglycol solvent.
- cat. A107 (UC) = tertiary amine catalyst (Union Carbide) with delayed action (= slow start but quick curing) typically used in "moulding" HR systems, prepared according to the moulded foam process
- DBTDL = dibutyltin dilaurate

### e) Surfactants

- L5307 (UC) = polydimethylsiloxane-polyether copolymer of Union Carbide, typically used as cell stabilizer in high resilient block foam.
- B4113 (Goldschmidt) = polydimethylsiloxane-polyether copolymer of Goldschmidt, typically used as cell regulator in high resilient foam (block or moulded) - smaller stabilizing effect than the L5307 type.

### f) Cross-linkers

- DEOA = diethanolamine
- TEOA = triethanolamine
- DIPA = diisopropanolamine
- glycerol

### g) Fire retardants

- F1 = urea-formol oligomer mixture, according to the above mentioned formula wherein n is equal to 4, which is crushed to powder having an average granulometry of 50 µm
- F1 bis: idem to F1, but wherein n is on average equal to 10
- Fltris: idem to F1, but wherein n is on average equal to 30
- Flquater: idem to F1, but wherein n is on average equal to 50
- F2 = sulphur coated urea (20% by weight sulphur) - fine grains with a diameter of + /- 1 mm.
- F3 = dicyanediamide (average granulometry: 80 µm)
- F4 = tris-(2-chloroethyl)-phosphate
- F5 = melamine

### 2. PHYSICAL FOAM PROPERTIES

- RG = netto density in kg/m³ (free foam)
- DM = global moulded density in kg/m³;
- CLD 40%: compression hardness at 40% compression, expressed in kilopascal = kPa (ISO 3386 standard)
- ILD 25%: identation hardness - expressed in Newton (ISO 2439B standard)
- ER = elongation at break in % (ISO 1798 standard)
- RR = tensile strength in KPa (ISO 1798 standard)
- TR = tear resistance in Newton/cm (ASTM D 3574 standard)
- CS 50% = compression set at 50% compression (22 hours - 70 ° C) according to ISO 1856A
- EL = resilience ball rebound in % - ASTM D 3574
- LOI = oxygen index according to ASTM 2863-74. The higher this number, the better the fire resistance (easily combustible foams have LOI = 21).

An LOI 28 indicates a very high inherent fire resistance.
- MVSS302 = automobile fire test
   SE = self extinguishing
   F = failing (firespeed 100 mm/min)
- Calif 117 A = furniture fire test (California state)
   P = passes (before and after a heat aging at 104 ° C/22 hours)
   F = fails
- UL 94 HF1 = UL 94 horizontal fire test (Underwriters Laboratories USA); in this test, which is typically imposed for electronic applications, no burning drops may be produced during the test.
   P = passes
   F = fails
   F/P = border line case
- NBS: smoke chamber test (ASTM E662) = airbus

ATS1000.001 standard. Here the maximum optical smoke density (DS max.) is measured under flaming (FL) or smouldering (SM) test conditions.

Also the concentration of possibly toxic smoke gases (ppm), such as HCI, may be measured.
airbus standard: DS max. (after 4 to 6 minutes): <200 ppm (FL & SM conditions):
ppm HCI after 1.5 min.:<50
after 4 min.<500
   - Blowtorch test: internal fire test, wherein an oxygen rich flame (blue) (1100_{°}C - 15 cm length) is applied perpendicular on a 3 cm thick test sample during 30 sec. at a distance of 3 cm (between the outlet of the blowtorch and the test sample).
   - Boston test (USA): practical, full scale fire test, wherein in the corner (slit) between a seating and a back cushion 140 g paper as ignition source is ignited. Passes (P) in case the loss of weight of the foam after the test is smaller than 15%.

BS 5852 - part 2 test with "crib 5" as ignition source; this test is proposed in Great Britain for furniture and imposes that, after the test has been performed on a complex of polyurethane foam filling in combination with a standard FR-ester covering, the following criteria are met at the same time:
- loss of weight after the test: <60 g
- maximum burning time :<10 min.
- maximum after-smouldering time: <60 min.

In the different tables, the formulation was given in parts by weights with respect to 100 parts basic polyol while the isocyanate was expressed in NCO index (stoechiometric ratio in NCO with respect to the hydrogen active compounds).

Table I relates to examples of polyurethane formulations of the block foam type, wherein the raw materials were manually mixed with each other on a scale of 300 g polyol with a proportional amount of the remaining components ("handmix technique"). From this Table I, examples 7, 8 and 16 to 20 are clearly not according to the present invention since they do not involve the use of a linear urea-formol oligomer fire retardant mixture as defined in claims 1 and 12.

In Table II examples of polyurethane foam formulations are given, also of the block foam type, use being made of a "pilot plant" machine, wherein the fire retardants are pre-mixed as dispersion in the basic polyol. From this Table II, examples of 28, 29, 31, 32, 32/6, and 32/8 are not according to the invention.

Table III relates to some typical examples of flexible polyurethane foam formulations according the moulded foam process. Examples 42, 43 and 45 from this Table III are not according to the present invention.

In Table IV the properties of the polyurethane foams according to Table I are illustrated.

Table V relates to the properties of the polyurethane foams according to Table II, while table VI relates to the properties of the polyurethane foams according to table III, all of the properties being measured on moulded cushions (skin included).

The polyurethane foams according to the examples of table III are prepared by means of a low pressure injection machine with the three following separate components:
- polyol together with the fire retardant, the necessary amount of water, the surfactants and possibly other additives;
- the isocyanate;
- the physical blowing agent (F11 or MC)

The injection is effected in a metal test mould with dimensions of 40 x 40 x 10 cm and at a mould temperature of 50 _{°} C.

After the injection, the mould is closed so that no free foaming can take place, in contrast to the case of block foaming, and this mould is kept closed for 10 to 15 minutes.

Subsequently, the so obtained cushion is demoulded and submitted to mechanical crushing by compression between rollers.

The processing, i.e. the technological processability during the foam process and the visual aspect of the thus obtained foam materials, are fully satisfying in all of these examples (tables I, II and III).

In a somewhat unexpected way, it was found that the use of said linear urea-formol oligomer mixture as fire retardant also significantly improves the thermoforming characteristics of the polyurethane foam.

The thermoforming characteristics are meant to indicate how easy a permanent deformation of the foam can be obtained as a result of heat and compression (for example between two heated plates in a mould).

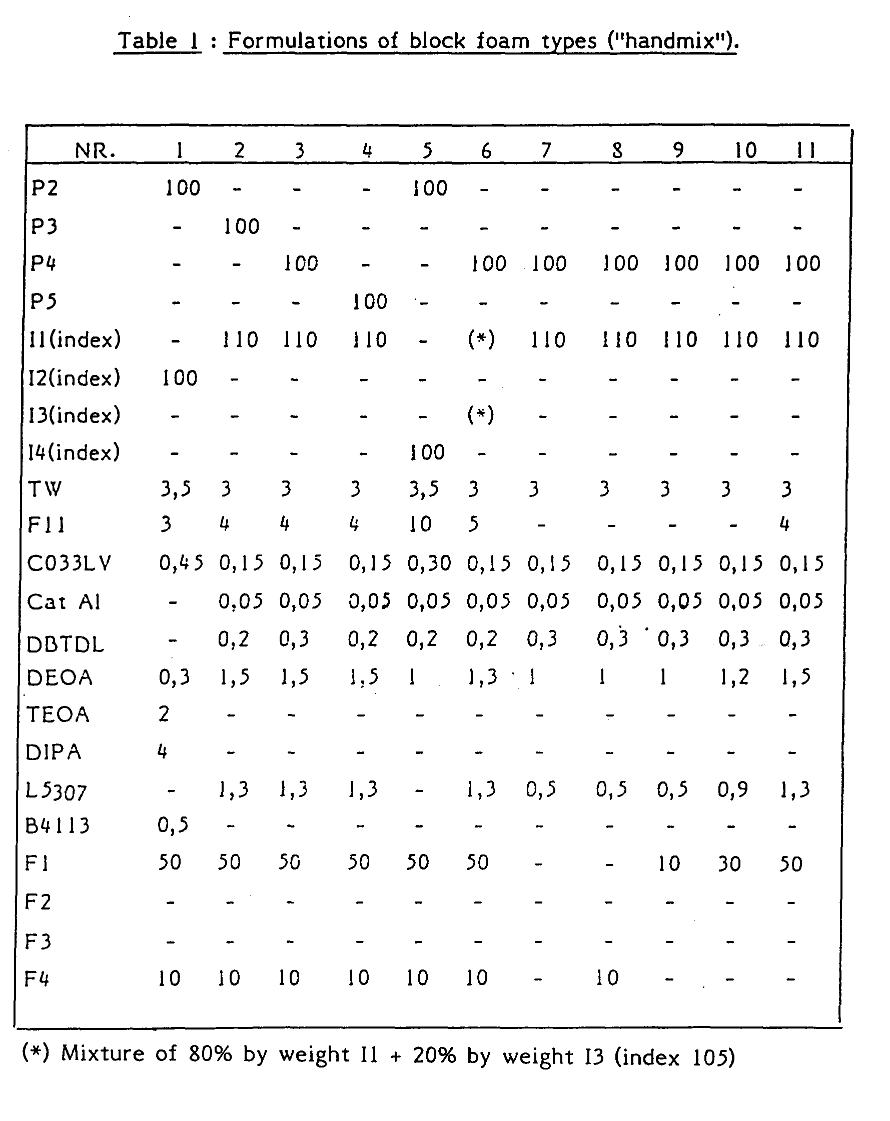

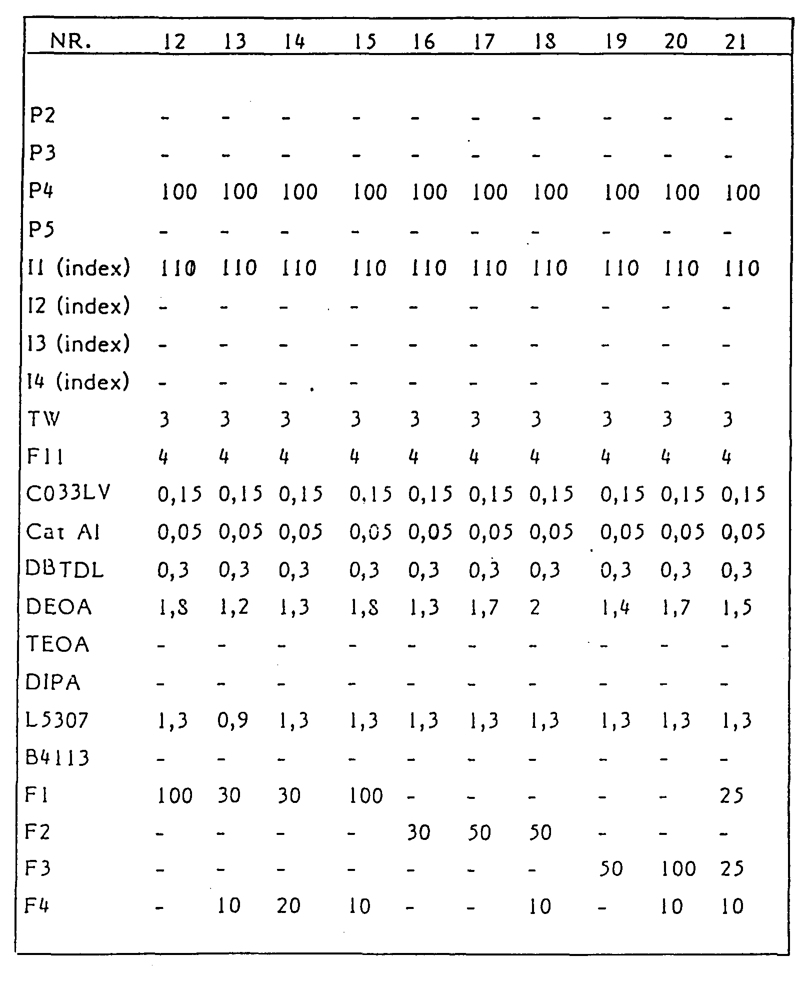

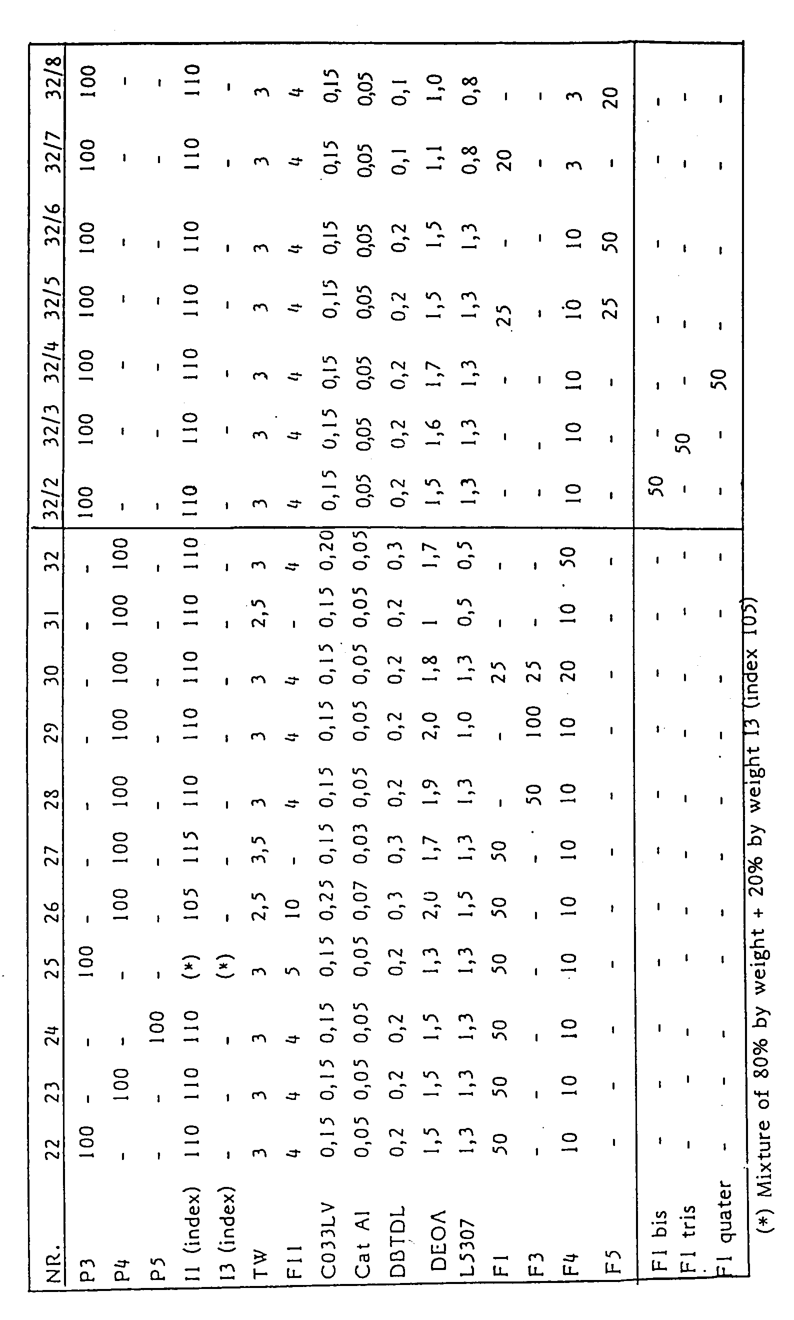

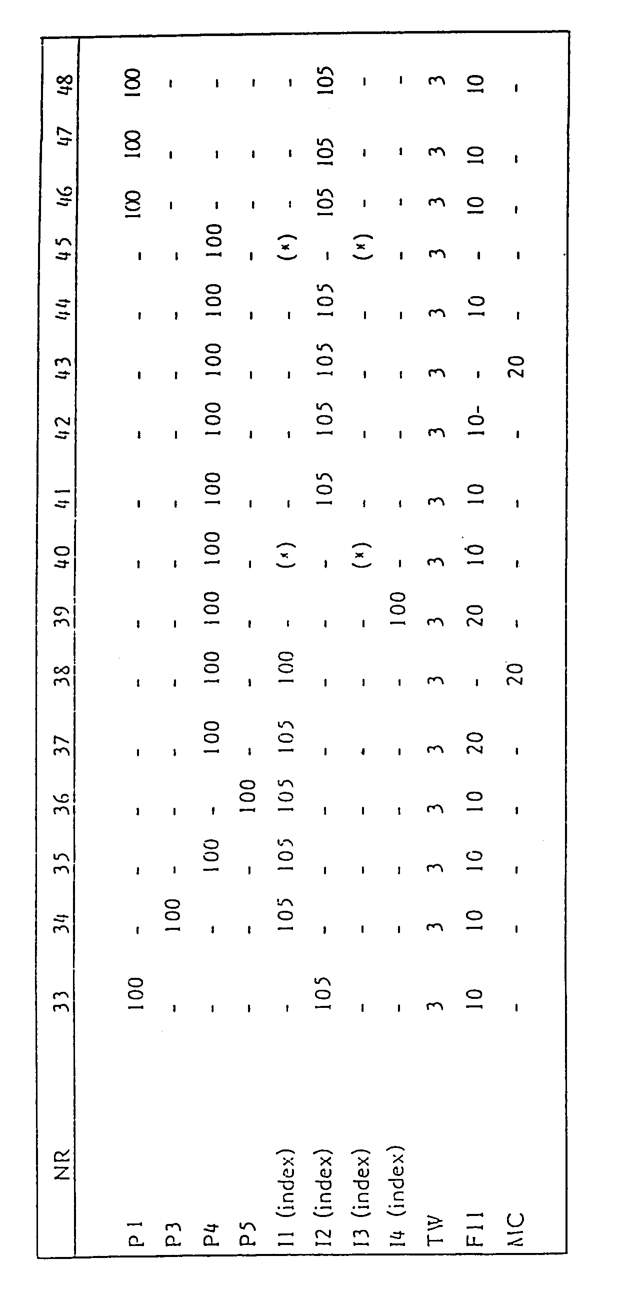

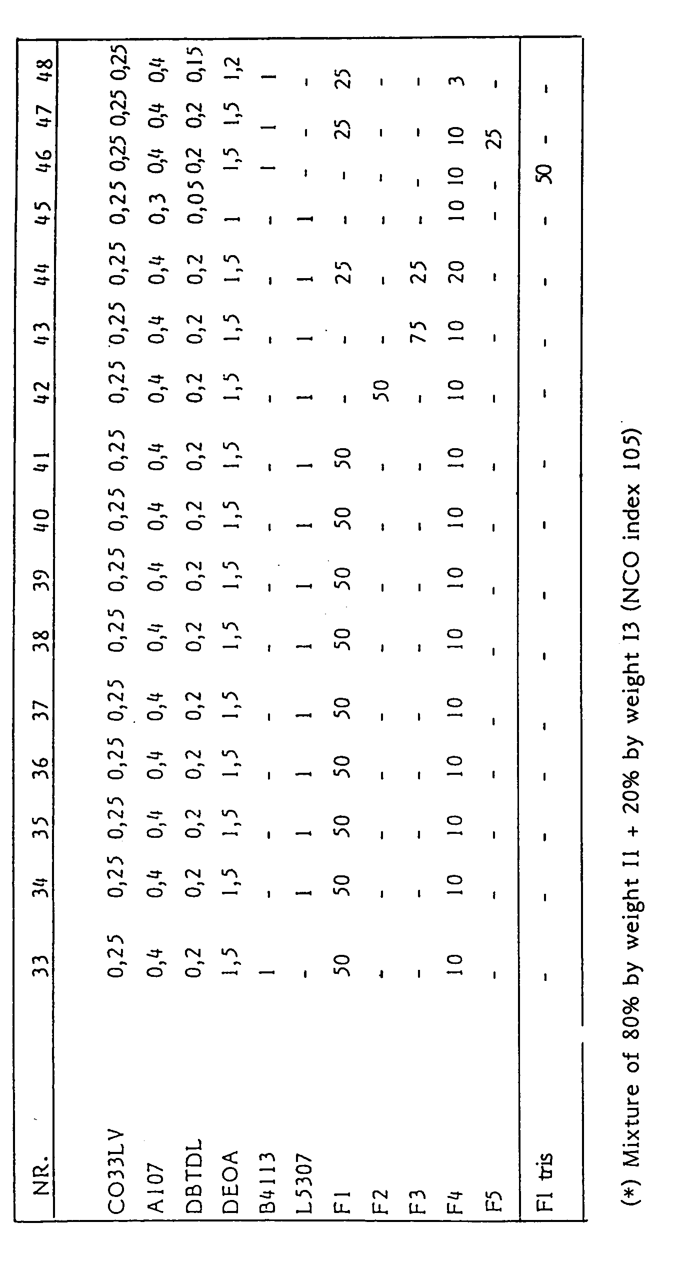

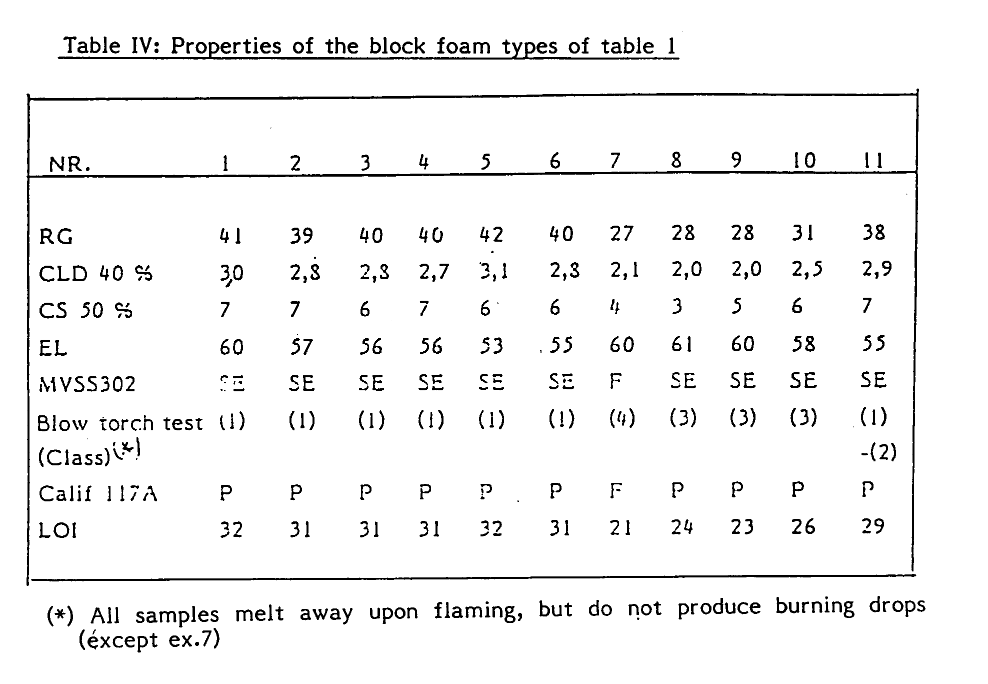

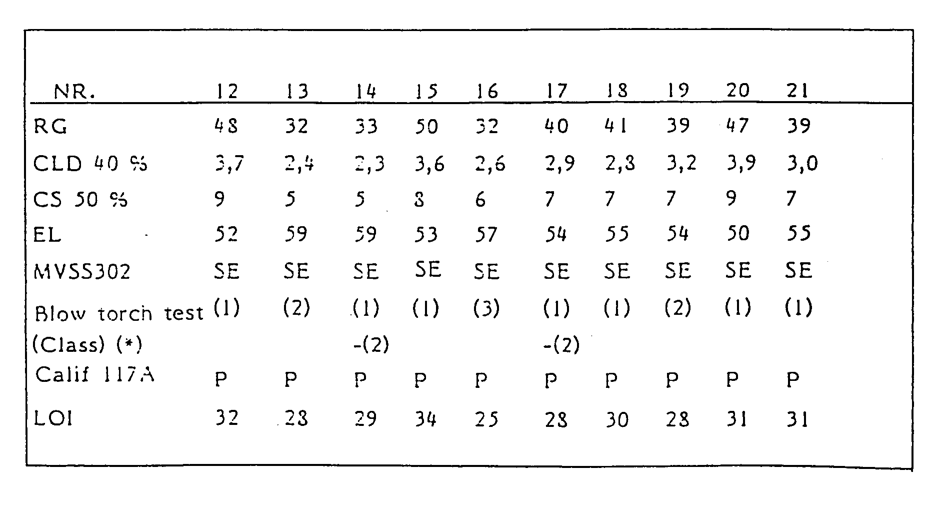

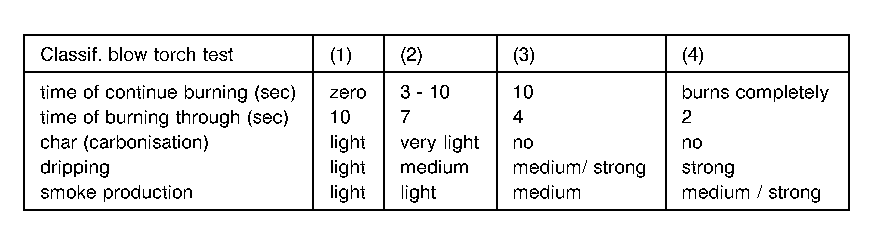

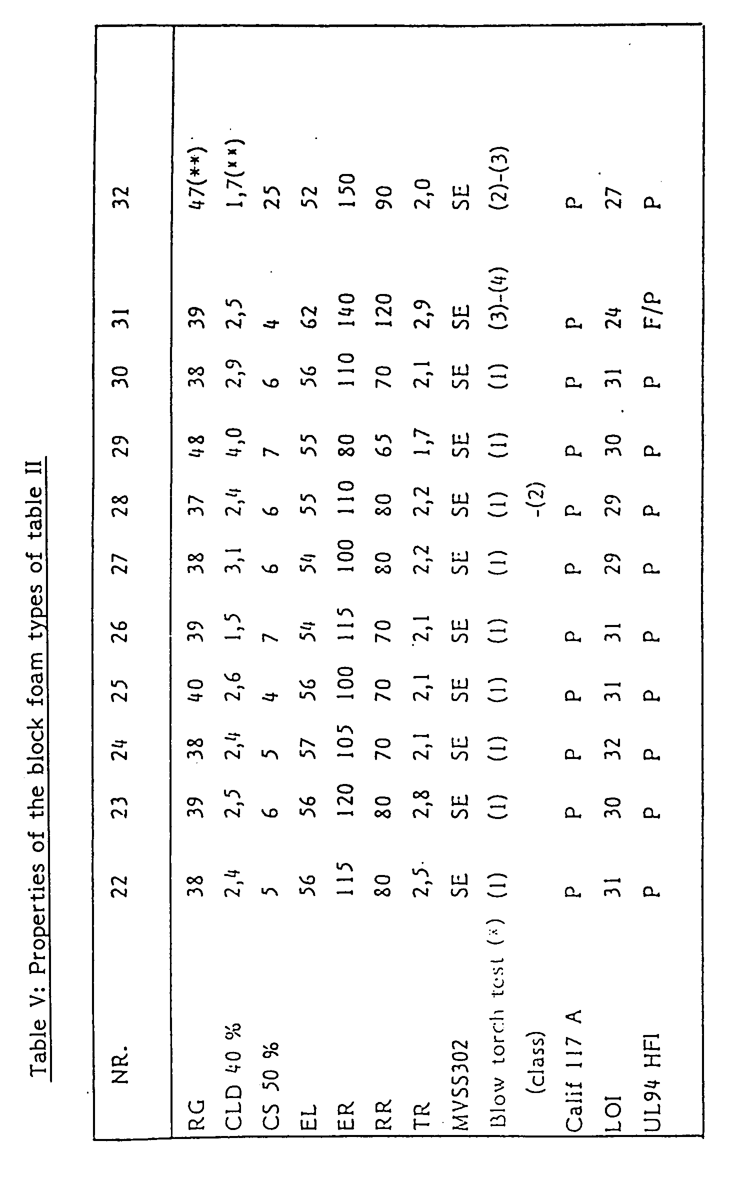

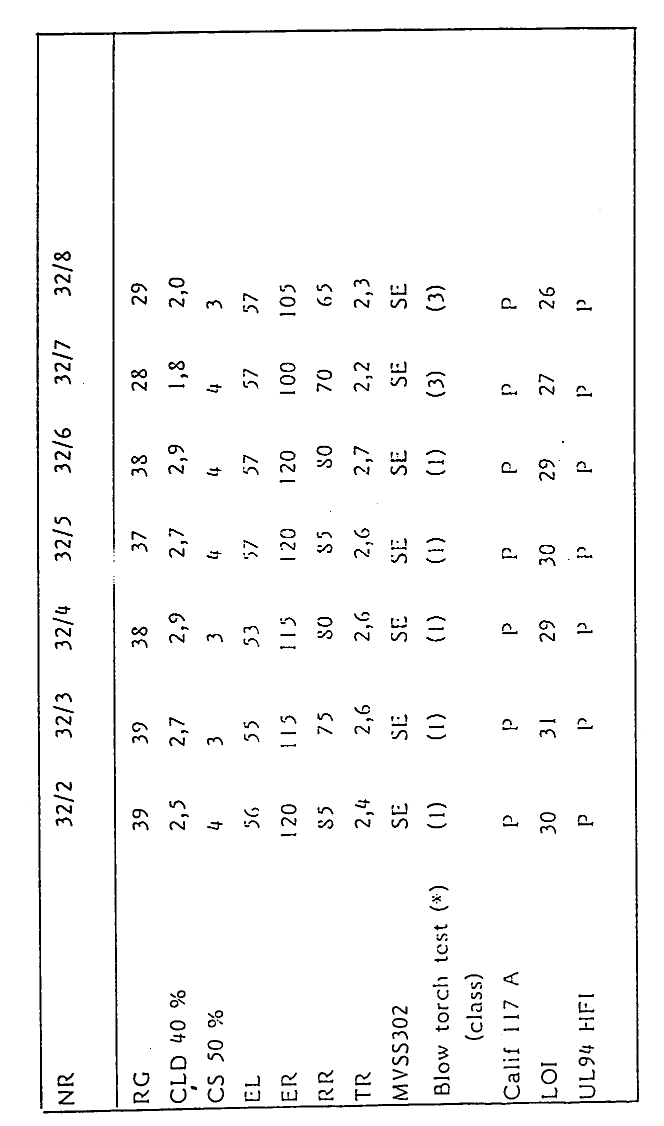

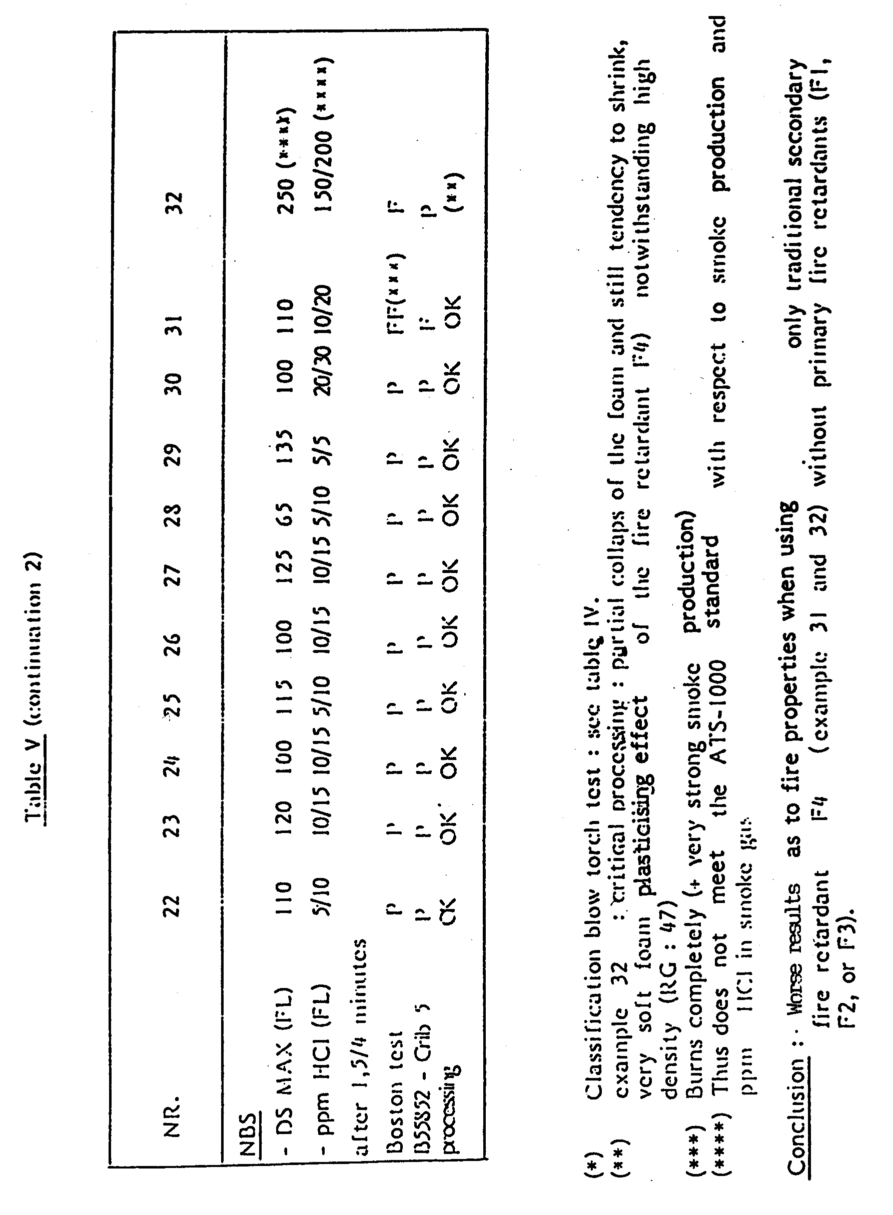

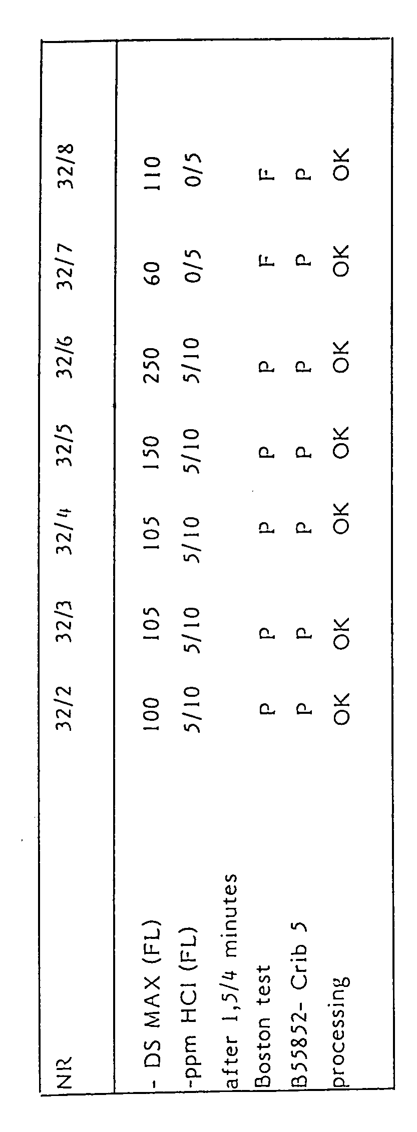

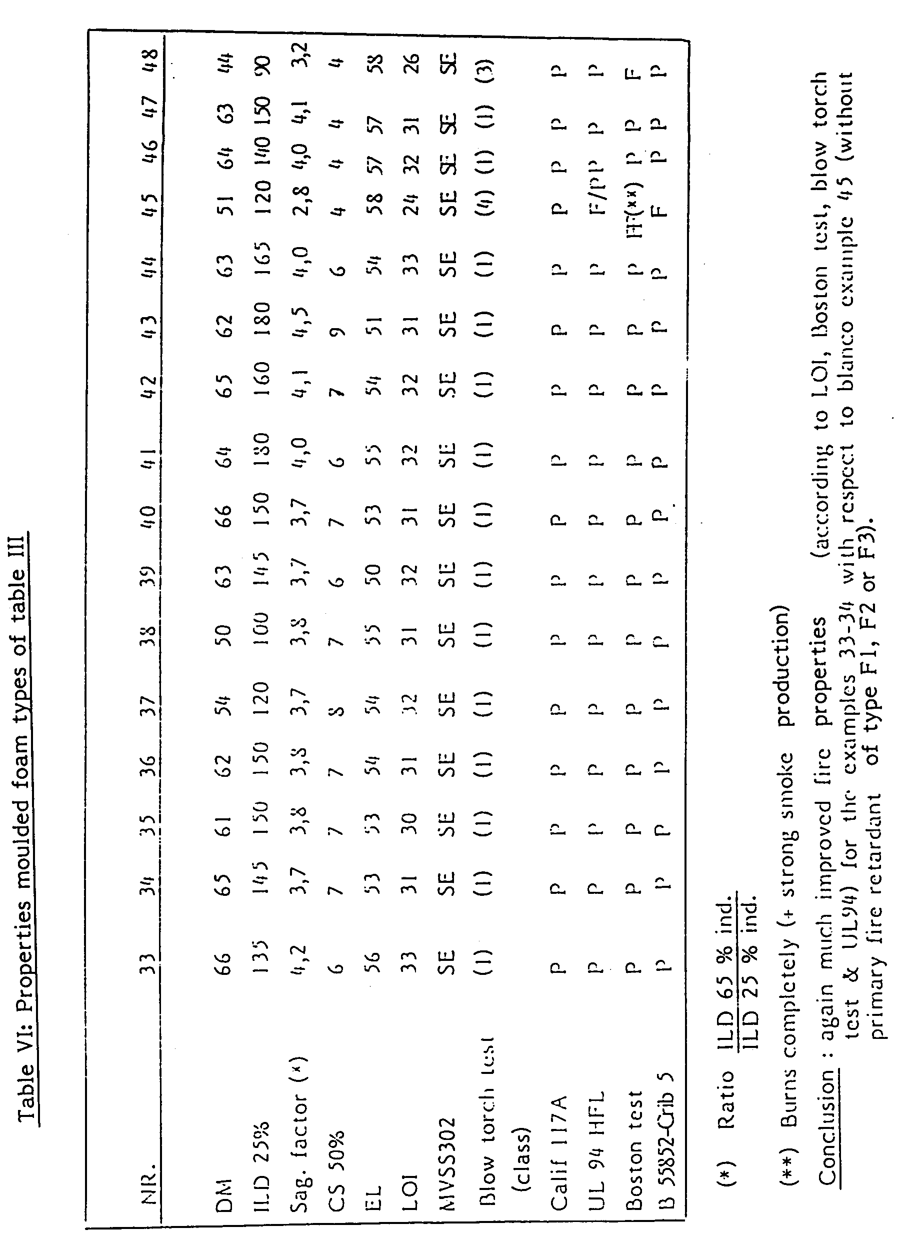

## Claims

1. A flexible high resilient polyurethane foam having a density of between 20 and 150 kg/m³ and obtained by reacting an isocyanate and/or a chemically modified derivative thereof with a high molecular weight reactive polyol, having a molecular weight comprised between 4000 and 10.000, a primary hydroxyl groups content of at least 60% with respect to the sum of the primary and secondary hydroxyl groups, and a functionality of from 2 to 4 functional end groups per polyol molecule, in the presence of a catalyst, a cross-linker, and/or extender, water as blowing agent and a fire retardant, characterized in that said fire retardant comprises at least a linear urea-formal oligomer mixture having the general formula NH₂-CO-NH-[CH₂-NH-CO-NH]ₙ-CH₂-NH-CO-NH₂, wherein n has a value comprised between 0 and 50.

2. A polyurethane foam as claimed in claim 1, characterized in that said fire retardant comprises urea in powdered form, the particles of which are at least partially coated with a less soluble film, either of sulfur or of a resin.

3. A polyurethane foam as claimed in either one of the claims 1 and 2, characterized in that said fire retardant comprises dicyandiamide having the general formula:

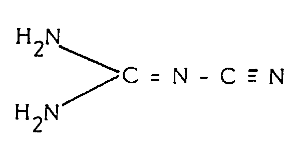

4. A polyurethane foam as claimed in claim 1, characterized in that said fire retardant essentially comprises said urea-formol oligomer mixture.

5. A polyurethane foam as claimed in one of claims 1 to 4, characterized in that in the general formula of said urea-formol oligomer mixture n has a value of from 1 to 20.

6. A polyurethane foam as claimed in any one of the claims 1 to 5, characterized in that said fire retardant has a free urea content of 15 % at most, preferably of 10 % at most.

7. A polyurethane foam as claimed in any one of the claims 1 to 6, characterized in that the content of fire retardant comprises 10-100 parts by weight per 100 parts by weight basic polyol, and preferably 20-100 parts by weight per 100 parts by weight polyol.

8. A polyurethane foam as claimed in any one of the claims 1 to 5, characterized in that it also comprises between 0 and 50 parts by weight with respect to 100 parts by weight polyol of at least one of the following fire retardants :
- a halogenated organic phosphate or phosphonate, such as tris-(2-chloroethyl)-phosphate, tris-(dichloropropyl)-phospate, tris-(dibromopropyl)-phosphate, tetrakis-(2-chloroethyl)-ethylene- diphosphate;
- an organic halogen free phospate or phosphonate, such as tricresylphosphate, dimethyl-methylphosphonate;
- a phosphorus free aliphatic halogen compound, such as chloro paraffin, PVC powder;
- an alicyclic or aromatic halogenated compound, such as polybrominated diphenyloxide;
- antimony oxide and/or zinc borate in a synergic combination with a halogen containing fire retardant;
- an inorganic fire retardant, such as ammonium salt, (more particularly ammonium phosphate, ammonium borate and ammonium sulphate) and aluminium trihydrate;
- an organic nitrogen compound, different from urea or said ureaformol oligomer, such as melamine, isobutylene diurea.

9. A polyurethane foam as claimed in any one of the claims 1 to 8, characterized in that it comprises in addition to said linear urea-formol oligomer mixture 10 to 50 parts by weight melamine per 100 parts by weight polyol.

10. A polyurethane foam as claimed in any one of the claims 1 to 9, characterized in that said isocyanate comprises toluene diisocyanate, 4,4'-diphenylmethanediisocyanate and/or chemically modified derivatives thereof, such as prepolymer, isocyanurate, biuret, carbodimide.

11. A polyurethane foam as claimed in any one of the claims 1 to 10, characterized in that the NCO index of the isocyanate varies between 80 and 120.

12. A method for preparing a polyurethane foam as claimed in one of the claims 1 to 11 by reacting an isocyanate and/or a chemically modified derivative therof with a high molecular weight reactive polyol, having a molecular weight comprised between 4000 and 10.000, a primary hydroxyl groups content of at least 60% with respect to the sum of the primary and secondary hydroxyl groups and a functionality of from 2 to 4 functional end groups per polyol molecule, in the presence of a catalyst, a crosslinker and/or extender, water as blowing agent and a fire retardant, characterized in that use is made of a fire retardant which comprises at least a linear urea-formol oligomer mixture having the general formula NH₂-CO-NH-[CH₂-NH-CO-NH]ₙ-CH₂-NH-CO-NH₂, wherein n has a value comprised between 0 and 50, which fire retardant is dispersed in powdered form into the polyol which is afterwards brought in contact with other polyurethane foam reaction components.

13. A method as claimed in claim 12, characterized in that the fire retardant is dispersed in the polyol, in powdered form having a granulometry which is preferably comprised between 10 and 300 /1.m, before bringing this polyol into contact with the isocyanate and the other ingredients for producing the polyurethane foam.

14. A method as claimed in claim 12 or 13, characterized in that use is made of at least one tertiary amine, such as triethylene diamine, dimethylaminoethanol or bis-(2-methyl)-aminoethylether as catalyst.

15. A method as claimed in any one of the claims 12 to 14, characterized in that use is made of at least one organo-metal compound such as stannous octoate and dibutyltin dilaurate as catalyst.

## Patentansprüche

1. Flexibler Polyurethanschaumstoff mit hoher Rückprallfederkraft, der eine Dichte zwischen 20 und 150 kg/m³ aufweist und durch die Reaktion eines Isocyanats und/oder eines chemisch modifizierten Derivats davon mit einem reaktiven Polyol hohen Molekulargewichts, welches ein Molekulargewicht im Bereich zwischen 4000 und 10 000, einem Gehalt an primären Hydroxylgruppen von mindestens 60 % in bezug auf die Summe der primären und sekundären Hydroxylgruppen sowie eine Funktionalität von 2 bis 4 funktionellen Endgruppen pro Polyolmolekül aufweist, in Anwesenheit eines Katalysators, eines Quervernetzungsmittels und/oder Kettenverlängerers, Wasser als Schäumungsmittel und einen Flammhemmer, erhalten worden ist, dadurch gekennzeichnet, daß der Flammhemmer mindestens ein Gemisch aus linearen Urea-Formol-Oligomeren gemäß der allgemeinen Formel NH₂-CO-NH-[CH₂-NH-CO-NH]ₙ-CH₂-NH-CO-NH₂ aufweist, worin n einen Wert zwischen 0 und 50 bedeutet.

2. Polyurethanschaumstoff gemäß Anspruch 1, dadurch gekennzeichnet, daß das feuerhemmende Mittel Harnstoff in Pulverform aufweist, wobei dessen Teilchen mindestens teilweise mit einem weniger löslichem Film entweder aus Schwefel oder einem Harz überzogen sind.

3. Polyurethanschaumstoff gemäß einem der Ansprüche 1 bis 2, dadurch gekennzeichnet, daß das feuerhemmende Mittel Dicyanamid der allgemeinen Formel 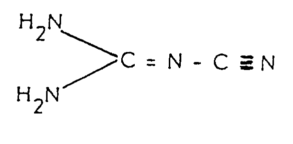 aufweist.

4. Polyurethanschaumstoff gemäß Anspruch 1, dadurch gekennzeichnet, daß das feuerhemmende Mittel im wesentlichen das Urea-Formol-Oligomeren-Gemisch enthält.

5. Polyurethanschaumstoff gemäß einem der Ansprüche 1 bis 4, dadurch gekennzeichnet, daß in der allgemeinen Formel des Urea-Formol-Oligomeren-Gemisches n einen Wert zwischen 1 und 20 hat.

6. Polyurethanschaumstoff gemäß einem der Ansprüche 1 bis 5, dadurch gekennzeichnet, daß das feuerhemmende Mittel einen Höchstgehalt an freiem Harnstoff von 15 %, vorzugsweise von höchstens 10 % besitzt.

7. Polyurethanschaumstoff gemäß einem der Ansprüche 1 bis 6, dadurch gekennzeichnet, daß der Gehalt an feuerhemmendem Mittel 10 bis 100 Gewichtsteile pro 100 Gewichtsteile Polyolgrundlage und vorzugsweise 20 bis 100 Gewichtsteile pro 100 Gewichtsteile Polyol aufweist.

8. Polyurethanschaumstoff gemäß einem der Ansprüche 1 bis 5, dadurch gekennzeichnet, daß er zusätzlich zwischen 0 und 50 Gewichtsteilen mindestens eines der folgenden feuerhemmenden Mittel in bezug auf 100 Gewichtsteile Polyol enthält:
- halogeniertes organisches Phosphat oder Phosphonat, wie z.B. Tris-(2-chlorethyl)-phosphat, Tris-(dichlorpropyl)-phosphat, Tris-(dibrompropyl)-phosphat, Tetrakis-(2-chlorethyl)-ethylen-diphosphat,
- ein organisches halogenfreies Phosphat oder Phosphonat, wie z.B. Trikresylphosphat, Dimethylmethylphosphonat,
- eine phosphorfreie aliphatische Halogenverbindung wie z.B. Chlorparaffin, PVC-Pulver,
- eine alicyklische oder aromatische halogenierte Verbindung, wie z.B. polybromiertes Diphenyloxid,
- Antimonoxid und/oder Zinkborat in einer synergistischen Kombination mit einem Halogen enthaltenden feuerhemmenden Mittel,
- ein anorganisches feuerhemmendes Mittel, wie z.B. Ammoniumsalz (insbesondere Ammoniumphosphat, Ammoniumborat und Ammoniumsulfat) sowie Aluminiumtrihydrat,
- eine organische Stickstoffverbindung, welche von Harnstoff oder dem Urea-Formol-Oligomer verschieden ist, wie z.B. Melamin, Isobutylendiurea

9. Polyurethanschaumstoff gemäß einem der Ansprüche 1 bis 8, dadurch gekennzeichnet, daß er zusätzlich zu dem Gemisch aus linearem Urea-Formol-Oligomer 10 bis 50 Gewichtsteile Melamin pro 100 Gewichtsteile Polyol enthält.

10. Polyuretanschaumstoff gemäß einem der Ansprüche 1 bis 9, dadurch gekennzeichnet, daß das Isocyanat Toluoldiisocyanat,-4,4'-diphenylmethandiisocyanat und/oder chemisch modifizierte Derivate davon, wie z.B. in Form des Präpolymers, Isocyanorats, Biurets oder Carbodiimids aufweist.

11. Polyurethanschaumstoff gemäß einem der Ansprüche 1 bis 10, dadurch gekennzeichnet, daß der NCO-Index des Isocyanats zwischen 80 und 120 variiert.

12. Verfahren zur Herstellung eines Polyurethanschaumstoffes gemäß einem der Ansprüche 1 bis 11 auf Basis der Reaktion eines Isocyanats und/oder einem chemisch modifizierten Derivat davon mit einem reaktiven Polyol hohen Molekulargewichts mit einem Molekulargewicht im Bereich zwischen 4000 und 10 000, einem Gehalt an primären Hydroxylgruppen von wenigstens 60 % in bezug auf die Summe der primären und sekundären Hydroxylgruppen sowie einer Funktionalität zwischen 2 und 4 funktionellen Endgruppen pro Polyolmolekül, in Anwesenheit eines Katalysators, eines Quervernetzungsmittels und/oder Kettenverlängerers, Wasser als Aufschäumungsmittel und einem feuerhemmenden Mittel, dadurch gekennzeichnet, daß ein feuerhemmendes Mittel eingesetzt wird, welches mindestens ein Gemisch aus einem linearen Urea-Formol-Oligomers gemäß allgemeiner Formel NH₂-CO-NH- [ CH₂-NH-CO-NH ]ₙ-CH₂-NH-CO-NH₂ aufweist,
worin n einen Wert zwischen 0 und 50 hat, wobei das feuerhemmende Mittel in gepulverter Form in dem Polyol dispergiert wird, welches im Anschluß daran in Kontakt mit anderen Polyurethan-Schaumstoffreaktionspartnern in Kontakt gebracht wird.

13. Verfahren gemäß Anspruch 12, dadurch gekennzeichnet, daß das feuerhemmende Mittel in dem Polyol in gepulverter Form einer Korngrößenverteilung dispergiert wird, die sich vorzugsweise zwischen 10 und 300 um bewegt, bevor das Polyol in Kontakt mit dem Isocyanat und den anderen Bestandteilen zur Herstellung des Polyurethanschaumstoffes in Kontakt gebracht wird.

14. Verfahren gemäß Anspruch 12 oder 13, dadurch gekennzeichnet, daß mindestens ein tertiäres Amin wie z.B. Triethylendiamin, Dimethylaminoethanol oder Bis-(2-methyl)aminoethylether als Katalysator eingesetzt wird.

15. Verfahren gemäß einem der Ansprüche 12 bis 14, dadurch gekennzeichnet, daß mindestens eine organometallische Verbindung, wie z.B. Zinnoktoat und Dibutylzinndilaurat als Katalysator eingesetzt wird.

## Revendications

1. Mousse de polyuréthanne hautement résiliente flexible ayant une densité entre 20 et 150 kg/m³ et obtenue par la réaction d'un isocyanate et/ou d'un dérivé modifié chimiquement de celui-ci avec un polyol réactif de poids moléculaire élevé ayant un poids moléculaire compris entre 4.000 et 10.000, une teneur en groupes hydroxyle primaires d'au moins 60 % par rapport à la somme des groupes hydroxyle primaires et secondaires et une fonctionnalité de 2 à 4 groupes d'extrémité fonctionnels par molécule de polyol, en présence d'un catalyseur, d'un agent de réticulation et/ou d'un agent d'extension, d'eau comme agent de soufflage et d'un agent retardant le feu, caractérisée en ce que l'agent retardant le feu comprend au moins un mélange oligomère d'urée-formol linéaire ayant la formule générale NH₂-CO-NH-[CH₂-NH-CO-NHjₙ-CH₂-NH-CO-NH₂, dans laquelle n a une valeur comprise entre 0 et 50.

2. Mousse de polyuréthanne suivant la revendication 1, caractérisée en ce que l'agent retardant le feu comprend de l'urée sous forme pulvérulente, dont les particules sont au moins partiellement enrobées d'un film moins soluble, soit de soufre soit d'une résine.

3. Mousse de polyuréthanne suivant l'une ou l'autre des revendications 1 et 2, caractérisée en ce que l'agent retardant le feu comprend du dicyandiamide ayant la formule générale :

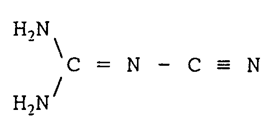

4. Mousse de polyuréthanne suivant la revendication 1, caractérisée en ce que l'agent retardant le feu comprend essentiellement le mélange oligomère d'urée-formol.

5. Mousse de polyuréthanne suivant l'une quelconque des revendications 1 à 4, caractérisée en ce que dans la formule générale du mélange oligomère d'urée-formol n a une valeur de 1 à 20.

6. Mousse de polyuréthanne suivant l'une quelconque des revendications 1 à 5, caractérisée en ce que l'agent retardant le feu a une teneur en urée libre de tout au plus 15 %, avantageusement de tout au plus 10 %.

7. Mousse de polyuréthanne suivant l'une quelconque des revendications 1 à 6, caractérisée en ce que la teneur en agent retardant le feu constitue 10-100 parties en poids pour 100 parties en poids de polyol basique, et avantageusement de 20-100 parties en poids pour 100 parties en poids de polyol.

8. Mousse de polyuréthanne suivant l'une quelconque des revendications 1 à 5, caractérisée en ce qu'elle comprend également entre 0 et 50 parties en poids par rapport à 100 parties en poids de polyol d'au moins un des agents retardant le feu suivants :
- un phosphate ou phosphonate organique halogéné, tel que le tris-(2-chloroéthyl)-phosphate, le tris-(dichloropropyl)-phosphate,le tris-(dibromopropyl)-phosphate, le tétrakis-(2-chloroéthyl)-éthylène-diphosphate;
- un phosphate ou phosphonate exempt d'halogène organique, tel que le tricrésylphosphate, le diméthylméthylphosphonate;
- un composé halogéné aliphatique exempt de phosphore, tel qu'une chloro paraffine, une poudre de PVC;
- un composé halogéné alicyclique ou aromatique, tel que le diphényloxyde polybromé;
- l'oxyde d'antimoine et/ou le borate de zinc dans une combinaison synergique avec un agent retardant le feu contenant un halogène;
- un agent retardant le feu inorganique, tel qu'un sel d'ammonium (plus particulièrement le phosphate d'ammonium, le borate d'ammonium et le sulfate d'ammonium) et le trihydrate d'aluminium;
- un composé azoté organique, différent de l'urée ou de l'oligomère d'urée-formol, comme la mélamine, l'isobutylène diurée.

9. Mousse de polyuréthanne suivant l'une quelconque des revendications 1 à 8, caractérisée en ce qu'elle comprend en plus du mélange oligomère d'uréeformol linéaire 10 à 50 parties en poids de mélamine pour 100 parties en poids de polyol.

10. Mousse de polyuréthanne suivant l'une quelconque des revendications 1 à 9, caractérisée en ce que l'isocyanate comprend le toluène diisocyanate, le 4,4'-diphénylméthanediisocyanate et/ou leurs dérivés modifiés chimiquement, tels qu'un prépolymère, un isocyanurate, un biuret, un carbodiimide.

11. Mousse de polyuréthanne suivant l'une quelconque des revendications 1 à 10, caractérisée en ce que l'indice de NCO de l'isocyanate varie entre 80 et 120.

12. Procédé de préparation d'une mousse de polyuréthanne suivant l'une quelconque des revendications 1 à 11 par la réaction d'un isocyanate et/ou d'un dérivé modifié chimiquement de celui-ci avec un polyol réactif d'un poids moléculaire élevé, ayant un poids moléculaire compris entre 4.000 et 10.000, une teneur en groupes hydroxyle primaires d'au moins 60 % par rapport à la somme des groupes hydroxyle primaires et secondaires et une fonctionnalité de 2 à 4 groupes d'extrémité fonctionnels par molécule de polyol, en présence d'un catalyseur, d'un agent de réticulation et/ou d'un agent d'extension, d'eau comme agent de soufflage et d'un agent retardant le feu, caractérisé en ce que utilisation est faite d'un premier agent retardant le feu qui comprend au moins un mélange oligomère d'urée- formol linéaire ayant la formule générale NH₂-CO-NH-[CH₂-NH-CO-NHjₙ-CH₂-NH-CO-NH₂, dans laquelle n a une valeur comprise entre 0 et 50, lequel agent retardant le feu est dispersé sous une forme pulvérulente dans le polyol qui est par la suite mis en contact avec d'autres composants réactionnels de la mousse de polyuréthanne.

13. Procédé suivant la revendication 12, caractérisé en ce que l'agent retardant le feu est dispersé dans le polyol, sous une forme pulvérulente ayant une granulométrie qui est avantageusement comprise entre 10 et 300 um, avant d'amener ce polyol en contact avec l'isocyanate et les autres ingrédients pour produire la mousse de polyuréthanne.

14. Procédé suivant l'une ou l'autre des revendications 12 et 13, caractérisé en ce que utilisation est faite d'au moins une amine tertiaire, telle que la triéthylène diamine, le diméthylaminoéthanol ou le bis-(2-méthyl)-aminoéthyléther comme catalyseur.

15. Procédé suivant l'une quelconque des revendications 12 à 14, caractérisé en ce que utilisation est faite d'au moins un composé organométallique tel que l'octoate stanneux et le dilaurate de dibutylétain comme catalyseur.
